# EUROPEAN PATENT SPECIFICATION

(11) **EP 3 967 605 B1**
(45) Date of publication and mention of the grant of the patent: **09.07.2025**
(21) Application number: 21196349.1
(22) Date of filing: 13.09.2021
(51) Int. Cl.: B64D 25/14, B64D 25/18, F04F 5/00

(54) **A DUAL SYSTEM ELECTRIC POWERED ASPIRATORS**
DOPPELSYSTEM ELEKTRISCH ANGETRIEBENER SAUGER
DOUBLE SYSTÈME D'ASPIRATEURS ÉLECTRIQUES

(30) Priority: 12.09.2020 IN 202041039522; 24.12.2020 US 202017134001
(43) Date of publication of application: 16.03.2022
(73) Proprietor: Goodrich Corporation, Charlotte, NC 28217-4578 (US)
(72) Inventor: KUPPAN, Skandan Berikai, 560048 Bangalore (IN); WERBELOW, Jeffrey Martin, Phoenix, AZ, 85048 (US)
(74) Representative: Dehns

(56) References cited:
- EP-A2- 0 034 357
- WO-A1-2016/061446
- WO-A1-83/02981
- FR-A1- 2 343 199
- US-A- 3 468 472
- US-A- 4 375 877

## Description

### CROSS-REFERENCE TO RELATED APPLICATIONS

This application claims priority to India Provisional Application No. 202041039522 with DAS code D2E7, entitled "A DUAL SYSTEM ELECTRIC POWERED ASPIRATORS," filed on September 12, 2020.

### FIELD

The present disclosure is directed to evacuation systems for use in aircraft and, more particularly, to a dual aspirator system for inflating flotation devices and inflation assemblies for evacuation systems.

### BACKGROUND

Evacuation systems of aircraft may include an inflatable device, such as an evacuation slide, an aspirator for inflating the inflatable device, and a source of compressed gas (e.g., one or more tank of compressed gas). In response to the evacuation system becoming deployed, the source of compressed gas may release gas through the aspirator, which then also draws air from the environment of the aspirator and inflates the inflatable device using the decompressed gas and the air. However, use of compressed gas storage tanks may be undesirable for various reasons. For example, the storage tanks may undesirably increase a total weight of the aircraft. Additionally, the storage tanks may be difficult to store and transport on board the aircraft.

Thus, there is a need in the art for alternative systems for inflating inflatable devices. US 4 375 877 A and EP 0 034 357 A2 describe escape slides together with their inflation devices.

### SUMMARY

Described herein is a system for inflating an inflatable device. The system includes a ducted fan aspirator coupled to the inflatable device and having a fan and a fan motor configured to drive the fan to direct first air into the inflatable device. The system further includes a compressor aspirator coupled to the inflatable device and having a compressor and a compressor motor configured to drive the compressor to direct second air into the inflatable device.

The compressor aspirator includes a secondary inlet configured to facilitate flow of a third air into the inflatable device in response to the compressor directing the second air into the inflatable device.

The compressor aspirator further includes a primary inlet through which the second air flows into the compressor aspirator. In preferred embodiments, a primary flap is located proximate to the primary inlet and configured to reduce the likelihood of the second air flowing upstream through the primary inlet and a secondary flap is located proximate to the secondary inlet and configured to reduce the likelihood of the third air flowing upstream through the secondary inlet.

In preferred embodiments, the compressor aspirator has a longitudinal axis, and the primary inlet is located radially inward relative to the secondary inlet.

In preferred embodiments, the compressor aspirator further includes:
an outlet through which the second air and the third air flow out of the compressor aspirator and into the inflatable device; an outlet chamber in which the second air and the third air mix; a primary outlet downstream from the compressor through which the second air enters the outlet chamber; and a secondary outlet downstream from the secondary inlet through which the third air enters the outlet chamber.

In preferred embodiments, the ducted fan aspirator further includes: a fan inlet through which the first air flows into the ducted fan aspirator; a fan flap located proximate to the fan inlet and configured to reduce the likelihood of the first air flowing upstream through the fan inlet; a fan outlet downstream from the fan through which the first air flows out of the ducted fan aspirator; and a fan channel extending from the fan inlet to the fan outlet.

In preferred embodiments: the ducted fan aspirator has a longitudinal axis; the fan is centered along the longitudinal axis; and the fan has a fan radial length that is less than a channel radial length of the fan channel.

In preferred embodiments, the ducted fan aspirator is configured to direct the first air into the inflatable device during a first time period from a first start time to a first end time, and the compressor aspirator is configured to direct the second air into the inflatable device during a second time period from a second start time that is later than the first start time to a second end time that is later than the first end time.

Preferred embodiments may further include a controller coupled to the ducted fan aspirator and to the compressor aspirator and configured to control the fan to direct the first air into the inflatable device during the first time period and to control the compressor to direct the second air into the inflatable device during the second time period.

In preferred embodiments, the controller is further configured to control the fan and the compressor based on an elapsed amount of time since the first start time.

Preferred embodiments may further include a pressure sensor configured to detect a pressure of device air in the inflatable device, wherein the controller is further configured to control the fan and the compressor based on the pressure of the device air in the inflatable device.

In preferred embodiments, the fan includes any first fan or first compressor, and the compressor includes any second fan or second compressor.

Disclosed is a system for inflating an inflatable device. The system includes a ducted fan aspirator coupled to the inflatable device and having a fan and a fan motor configured to drive the fan to direct first air into the inflatable device during a first time period. The system further includes a compressor aspirator coupled to the inflatable device and having: a compressor and a compressor motor configured to drive the compressor to direct second air into the inflatable device via a primary inlet during a second time period that is different than the first time period, and a secondary inlet configured to facilitate flow of a third air into the inflatable device in response to the compressor directing the second air into the inflatable device during the second time period.

In preferred embodiments, the compressor aspirator further includes: a primary flap located proximate to the primary inlet and configured to reduce the likelihood of the second air flowing upstream through the primary inlet; and a secondary flap located proximate to the secondary inlet and configured to reduce the likelihood of the third air flowing upstream through the secondary inlet.

In preferred embodiments, the ducted fan aspirator further includes: a fan inlet through which the first air flows into the ducted fan aspirator; a fan flap located proximate to the fan inlet and configured to reduce the likelihood of the first air flowing upstream through the fan inlet; a fan outlet downstream from the fan through which the first air flows out of the ducted fan aspirator; and a fan channel extending from the fan inlet to the fan outlet.

Also disclosed is a method for inflating an inflatable device. The method includes providing, by a ducted fan aspirator, first air into the inflatable device during a first time period from a first start time to a first end time. The method further includes providing, by a compressor aspirator, second air into the inflatable device during a second time period from a second start time to a second end time.

In preferred embodiments, the second start time is later than the first start time, and the second end time is later than the first end time.

Preferred embodiments may further include providing, by the compressor aspirator, third air into the inflatable device during the second time period, the third air flowing through a secondary inlet of the compressor aspirator in response to the second air being provided by the compressor aspirator.

Preferred embodiments may further include controlling, by a controller, the ducted fan aspirator and the compressor aspirator based on an elapsed amount of time since the first start time.

Preferred embodiments may further include detecting, by a pressure sensor, a pressure of device air in the inflatable device; and controlling, by a controller, the ducted fan aspirator and the compressor aspirator based on the pressure of the device air.

The foregoing features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosures, however, may best be obtained by referring to the detailed description and claims when considered in connection with the drawing figures, wherein like numerals denote like elements.
FIG. 1 is a drawing of an aircraft having an exit door and an evacuation system, in accordance with various embodiments;
FIG. 2 is a drawing of the evacuation system of FIG. 1 including an inflatable device, in accordance with various embodiments;
FIG. 3A is a drawing of the inflatable device of FIG. 2 in an inflated configuration, in accordance with various embodiments;
FIG. 3B is a drawing of another inflatable device in an inflated configuration, in accordance with various embodiments;
FIG. 4 is a drawing of a ducted fan aspirator of the evacuation system of FIG. 1, in accordance with various embodiments;
FIGS. 5A, 5B, and 5C are drawings of a compressor aspirator of the evacuation system of FIG. 1, in accordance with various embodiments; and
FIG. 6 is a flowchart illustrating a method for controlling aspirators of an evacuation system similar to the evacuation system of FIG. 1, in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the disclosure, it should be understood that other embodiments may be realized and that logical, chemical, and mechanical changes may be made within the scope of the appended claims.

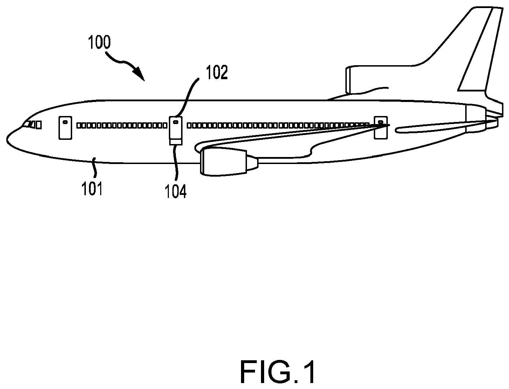

Referring now to FIG. 1, an aircraft 100 is shown. The aircraft 100 may include a fuselage 101 having a plurality of exit doors including an exit door 102. The aircraft 100 may include one or more evacuation systems positioned near a corresponding exit door or located anywhere in or on the fuselage 101. For example, the aircraft 100 includes an evacuation system 104 positioned near the exit door 102, and may include another evacuation system positioned in the fuselage 101 and designed to inflate outside of the fuselage to provide at least one of egress or flotation. The evacuation system 104 may be removably coupled to the fuselage 101. In the event of an emergency, the exit door 102 may be opened by a passenger or crew member of the aircraft 100. In various embodiments, the evacuation system 104 may deploy in response to the exit door 102 being opened and, in various embodiments, the evacuation system 104 may deploy in response to another action taken by a passenger or crew member such as depression of a button or actuation of a lever.

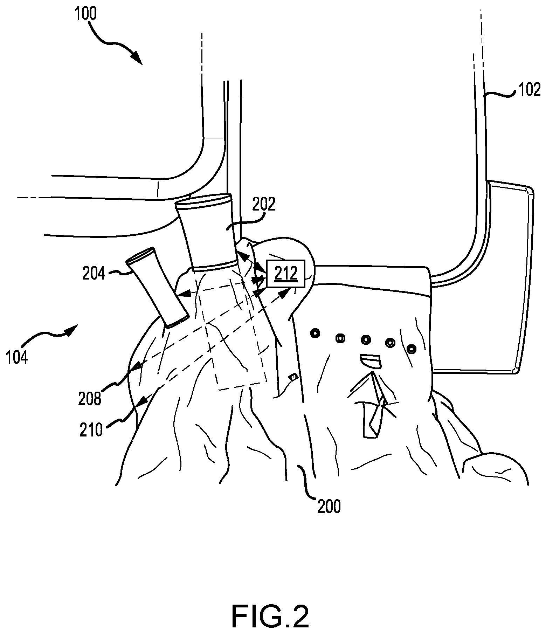

Turning to FIG. 2, additional details of the evacuation system 104 are illustrated. In particular, the evacuation system 104 includes an inflatable device 200. The evacuation system 104 further includes a ducted fan aspirator 202, a compressor aspirator 204, a controller 208, a pressure sensor 210, and a power source 212. The inflatable device 200 may be coupled to the fuselage 101 of FIG. 1, and may be decoupled from the fuselage 101 in response to being fully inflated or to being manually detached in order to allow passengers and/or crew members to safely float away from the aircraft 100 of FIG. 1. In various embodiments, the inflatable device 200 may be permanently coupled to the fuselage 101. In various embodiments, the inflatable device 200 may function as a slide from the fuselage 101 to a ground surface upon which the aircraft 100 is resting. In various embodiments, the inflatable device 200 may be entirely decoupled from the fuselage 101 at all times, may be removed from a cabin by a passenger or crew member, and may be inflated away from the fuselage.

Details regarding the ducted fan aspirator 202 and the compressor aspirator 204 will be discussed in more detail below. The controller 208 may include one or more processors and one or more tangible, non-transitory memories and be capable of implementing logic. The processor can be a general purpose processor, a digital signal processor (DSP), an application specific integrated circuit (ASIC), a field programmable gate array (FPGA) or other programmable logic device, discrete gate or transistor logic, discrete hardware components, or any combination thereof. The pressure sensor 210 may include any sensor capable of detecting data corresponding to a pressure within the inflatable device 200 (the air within the inflatable device 200 may be referred to as "device air"). The controller 208 may be coupled to the aspirators 202, 204 and may control the aspirators 202, 204. In various embodiments, the controller 208 may further be coupled to the pressure sensor 210, may determine the pressure within the inflatable device 200 based on the detected pressure data, and may control the aspirators 202, 204 based on the determined pressure. The power source 212 may include any power storage device such as one or more of a battery, a flywheel, or a supercapacitor. In various embodiments, the power source 212 may include any power generation device such as a generator. The power source 212 may provide electrical energy to any one or more of the aspirators 202, 204, the controller 208, or the pressure sensor 210 to facilitate operation of these elements.

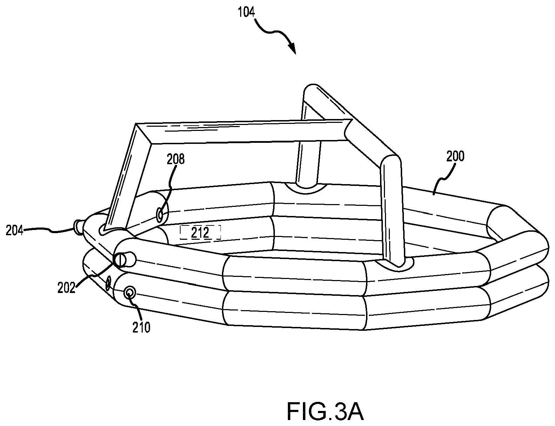

Referring to FIG. 3A, the inflatable device 200 is illustrated as fully inflated and separated from the fuselage 101 of FIG. 1. In particular, the aspirators 202, 204, the controller 208, the pressure sensor 210, and the power source 212 may remain coupled to the inflatable device 200. In various embodiments, one or more of these elements of the evacuation system 104 may become detached from the inflatable device 200 before, during, or after inflation.

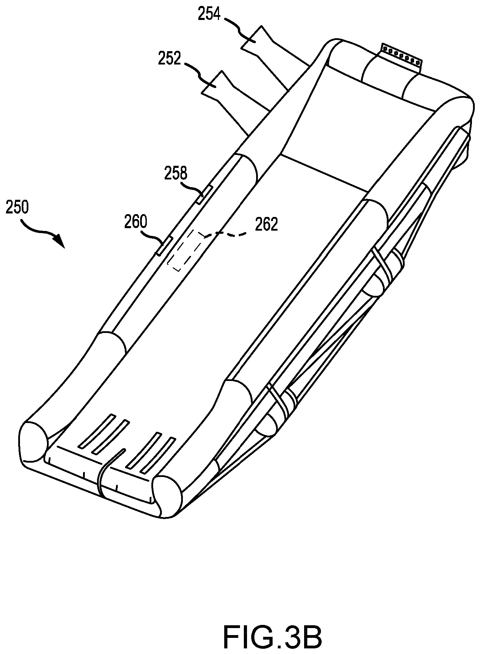

Referring briefly to FIG. 3B, another inflatable device 250 is shown as inflated. The inflatable device 250 may provide egress from an aircraft in various situations. In various embodiments, the inflatable device 250 may include similar features as the inflatable device 200 of FIG. 3A. In that regard, the inflatable device 250 may include a ducted fan aspirator 252 and a compressor aspirator 254. The inflatable device 250 may further include a controller 258, a pressure sensor 260, and a power source 262. The inflatable device 250 may be coupled to a fuselage of an aircraft, and may be decoupled from the fuselage in response to being fully inflated or to being manually detached in order to allow passengers and/or crew members to safely float away from the aircraft. In various embodiments, the inflatable device 250 may be permanently coupled to the fuselage. In various embodiments, the inflatable device 250 may function as a slide from the fuselage to a ground surface upon which the aircraft is resting

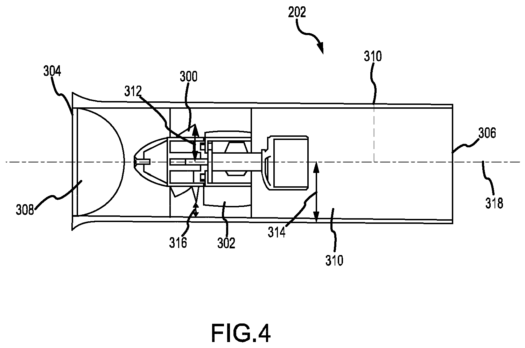

Referring now to FIGS. 3A and 4, additional details of the ducted fan aspirator 202 are shown. The ducted fan aspirator 202 includes a fan 300 and a fan motor 302 coupled to the fan 300. The fan 300 may include any fan capable of directing airflow through the ducted fan aspirator 202. The fan motor 302 may receive electrical energy and convert the electrical energy into mechanical power to drive the fan 300.

The ducted fan aspirator 202 may further include a fan inlet 304 and a fan outlet 306. The fan inlet 304 may be located outside of the inflatable device 200 and may receive air from the environment of the inflatable device 200. The airflow through the ducted fan aspirator 202 may flow out of the fan outlet 306. The fan outlet 306 may be at least partially located inside the inflatable device 200 such that the air flowing through the outlet 306 is received inside the inflatable device 200.

The ducted fan aspirator 202 may further include a fan flap 308 located proximate to the fan inlet 304. The fan flap 308 may allow airflow downstream (i.e., from the inlet 304 towards the outlet 306) and may reduce the likelihood of air flowing upstream (i.e., from the outlet 306 to and out through the inlet 304).

The ducted fan aspirator 202 includes may a fan channel 310 through which air flows between the fan inlet 304 and the fan outlet 306. In various embodiments, the fan channel 310 may have a channel radial length 314 (i.e., from a longitudinal axis 318 to an outer diameter of the fan channel 310) that remains constant along a length of the ducted fan aspirator 202 and, in various embodiments, the channel radial length 314 may vary along the length of the ducted fan aspirator 202. The fan 300 may have a fan radial length 312 extending from the longitudinal axis 318 to an outer edge of blades of the fan 300. The channel radial length 314 is greater than the fan radial length 312 at the location of the fan 300. In that regard, a gap 316 exists between the outer edge of the fan blades and the outer edge of the fan channel 310. As the fan 300 directs air through the fan channel 310, additional air may flow through the gap 316, thus increasing a total airflow through the ducted fan aspirator 202 beyond that provided solely by the fan 300.

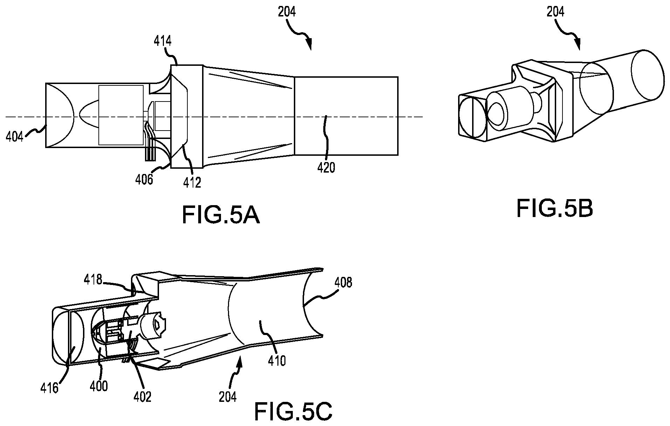

Referring now to FIGS. 3A, 5A, 5B, and 5C, additional details of the compressor aspirator 204 are shown. In particular, the compressor aspirator 204 includes a compressor 400 and a compressor motor 402. The compressor 400 may include any compressor capable of compressing air through the compressor aspirator 204. The compressor motor 402 may receive electrical energy and convert electrical energy into mechanical power to drive the compressor 400.

The compressor aspirator 204 may be referred to as a mixed flow aspirator as it may direct a primary airflow and a secondary airflow therethrough. In particular, the compressor aspirator 204 includes a primary inlet 404, a secondary inlet 406, an outlet 408, an outlet chamber 410, a primary outlet 412, and a secondary outlet 414. The compressor 400 may drive airflow from the primary inlet 404 towards the primary outlet 412. The compressed airflow through the compressor 400 may result in a negative pressure proximate to the secondary inlet 406, causing air to flow through the secondary inlet 406 and through the secondary outlet 414. The airflow through the primary outlet 412 and the secondary outlet 414 may mix in the outlet chamber 410 and be output via the outlet 408. The primary inlet 404 and the secondary inlet 406 may each be located outside of the inflatable device 200, and the outlet 408 may be located at least partially inside the inflatable device 200. In that regard, the air may flow into the compressor aspirator 204 at the inlets 404, 406 and may flow into the inflatable device 200 from the outlet 408.

The compressor aspirator 204 may further include one or more primary flap 416 located proximate to the primary inlet 404, and one or more secondary flap 418 located proximate to the secondary inlet 406. The primary flap 416 may allow air to flow downstream (i.e., from the primary inlet 404 towards the primary outlet 412) and may reduce the likelihood of air flowing upstream (i.e., from the primary outlet 412 towards and out through the primary inlet 404). The secondary flap 418 may allow air to flow downstream (i.e., from the secondary inlet 406 towards the secondary outlet 414), and may reduce the likelihood of air flowing upstream (i.e., from the secondary outlet 414 towards and out through the secondary inlet 406).

The compressor aspirator 204 may have a longitudinal axis 420. In various embodiments, the primary inlet 404 and the secondary inlet 406 may each be centered along the longitudinal axis 420. In various embodiments, the secondary inlet 406 may be located radially outward from the primary inlet 404 relative to the longitudinal axis 420.

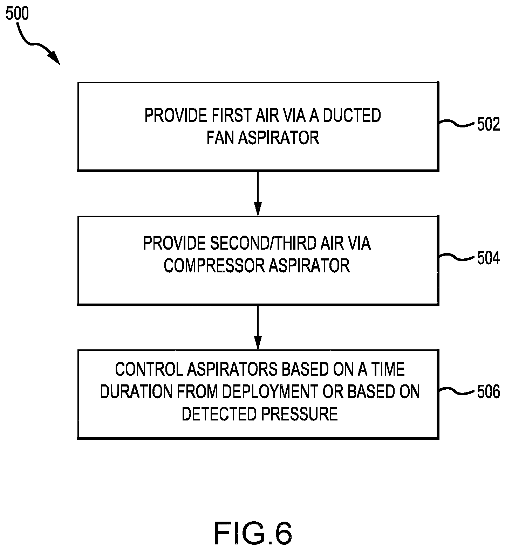

Referring now to FIGS. 2 and 3A and as referenced above, the controller 208 may control operation of the ducted fan aspirator 202 and the compressor aspirator 204, for example, based on data detected by the pressure sensor 210. Turning to FIGS. 2, 3A, and 6, a method 500 may be used by a controller (e.g., the controller 208) to control an evacuation system similar to the evacuation system 104.

In block 502, first air may be provided via a ducted fan aspirator similar to the ducted fan aspirator 202. The first air may be provided during a first time period between a first start time and a first end time. In block 504, second and third air may be provided by a compressor aspirator similar to the compressor aspirator 204. The second and third air may be provided by a primary and secondary inlet, respectively, of the compressor aspirator. The second and third air may be provided during a second time period between a second start time and a second end time. The second time period may be temporally spaced from the first time period. In various embodiments, the second time period may begin at or after the first end time and, in various embodiments, the second time period may begin before the first end time. In various embodiments, the first start time may be before the second start time, and the first end time may be before the second end time.

In various embodiments, it may be desirable for the first time period to run from deployment of the evacuation system until the inflatable device is fully unfolded, and for the second time period to run from a time at which the inflatable device is fully unfolded until the inflatable device is fully inflated. This is because the ducted fan aspirator may provide greater airflow at relatively low pressures compared to the compressor aspirator and because the compressor aspirator may provide greater airflow at relatively great pressures compared to the ducted fan aspirator. In that regard, the dual aspirator evacuation system may facilitate reduced weight, reduced inflation times, and reduced energy storage and power consumption requirements relative to a single aspirator evacuation system.

Referring to FIGS. 2, 3A, and 6 and in various embodiments, control of the compressor aspirator and the ducted fan aspirator may be performed based on an elapsed time since deployment of the evacuation system and may be controlled by a controller or by another means (e.g., timers located at the aspirators or respective motors). In various embodiments, control of the aspirators may be performed based on detected pressure data within the inflatable device. In various embodiments, the aspirators may be controlled independent of a controller based on elapsed times from deployment of the evacuation system.

In that regard and in block 506, a controller may control the aspirators based on a time duration from deployment of the evacuation system. For example, the controller may be aware of a duration of the first time period and of the second time period. In response to deployment, the controller may control the ducted fan aspirator to direct the first airflow into the inflatable device for the first time period. In response to expiration of the first time period, the controller may control the ducted fan aspirator to cease directing the air and may control the compressor aspirator to direct the second and third airflow into the inflatable device for the second time period.

As another example, the controller may be programmed with a specific pressure at which the advantages of the compressor aspirator outweigh the ducted fan aspirator. In that regard, the controller may control the ducted fan aspirator to direct the first air into the inflatable device until the pressure reaches the programmed specific pressure, and may control the compressor aspirator to direct the second and third air into the inflatable device starting in response to the detected pressure being equal to or greater than the programmed specific pressure and until the pressure reaches a fully inflated pressure.

By way of example, table 1 below illustrates power, energy, and weight savings for a dual aspirator system compared to a single aspirator system that includes only a compressor aspirator. A first row illustrates the power consumption, energy storage, and weight requirements of a specific single aspirator system for a specific aircraft. A second row illustrates the power consumption, energy storage, and weight requirements of a dual aspirator system for the same specific aircraft. A third row illustrates a percentage reduction in each of the power consumption, energy storage, and weight requirements afforded by the dual aspirator system. As shown, the dual aspirator system provides significant advantages relative to the single aspirator system.

| MIXED FLOW COMPRESSOR | POWER REQUIREMENT (kW) | ENERGY REQUIREMENT (Wh) | TOTAL WEIGHT (kg) |
|---|---|---|---|
| MIXED FLOW COMPRESSOR | 7.65 | 32 | 1.69 |
| DUAL SYSTEM | 3.52 | 5.49 | 0.728 |
| REDUCTION (%) | 54 | 82 | 57 |

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. Throughout the present disclosure, like references numbers may denote like elements. Accordingly, elements with element numbering may be shown in the figures, but may not necessarily be repeated herein for the sake of clarity. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A system for inflating an inflatable device (200;250), the system comprising:
the inflatable device;
a ducted fan aspirator (202;252) coupled to the inflatable device and having a fan (300) and a fan motor (302) configured to drive the fan to direct first air into the inflatable device, wherein the ducted fan aspirator includes a fan channel (310) through which air flows between a fan inlet (304) and a fan outlet (306);
a gap (316) configured to facilitate flow of a fourth air into the inflatable device in response to the fan directing the first air into the inflatable device, wherein the gap exists between an outer edge of fan blades of the fan and an outer edge of the fan channel such that, as the fan directs air through the fan channel, additional air may flow through the gap, thus increasing a total airflow through the ducted fan aspirator beyond that provided solely by the fan; and
a compressor aspirator (204;254) coupled to the inflatable device and having a compressor (400), a compressor motor (402) configured to drive the compressor to direct second air into the inflatable device, wherein the compressor aspirator includes a primary inlet (404) through which the second air flows into the compressor aspirator and a secondary inlet (406) configured to facilitate flow of a third air into the inflatable device in response to the compressor directing the second air into the inflatable device.

2. The system of claim 1, wherein the compressor aspirator further includes:
a primary flap (416) located proximate to the primary inlet and configured to reduce the likelihood of the second air flowing upstream through the primary inlet; and
a secondary flap (418) located proximate to the secondary inlet and configured to reduce the likelihood of the third air flowing upstream through the secondary inlet.

3. The system of claim 2 wherein the compressor aspirator has a longitudinal axis (420), and the primary inlet is located radially inward relative to the secondary inlet.

4. The system of claim 3, wherein the compressor aspirator further includes:
an outlet (408) through which the second air and the third air flow out of the compressor aspirator and into the inflatable device;
an outlet chamber (410) in which the second air and the third air mix;
a primary outlet (412) downstream from the compressor through which the second air enters the outlet chamber; and
a secondary outlet (414) downstream from the secondary inlet through which the third air enters the outlet chamber.

5. The system of claim 2, 3, or 4, wherein the ducted fan aspirator further includes:
the fan inlet (304) through which the first air flows into the ducted fan aspirator;
a fan flap (308) located proximate to the fan inlet and configured to reduce the likelihood of the first air flowing upstream through the fan inlet;
the fan outlet (306) downstream from the fan through which the first air flows out of the ducted fan aspirator; and
the fan channel (310) extending from the fan inlet to the fan outlet.

6. The system of claim 5, wherein
the ducted fan aspirator has a longitudinal axis (318);
the fan is centered along the longitudinal axis; and
the fan has a fan radial length (312) that is less than a channel radial length (314) of the fan channel.

7. The system of any preceding claim, further comprising a controller (208) coupled to the ducted fan aspirator and to the compressor aspirator and configured to direct the first air into the inflatable device during a first time period from a first start time to a first end time, and configured to direct the second air into the inflatable device during a second time period from a second start time that is later than the first start time to a second end time that is later than the first end time.

8. The system of claim 1, 3, 4, 5 or 6, further comprising a controller (208) coupled to the ducted fan aspirator and to the compressor aspirator and configured to control the fan to direct the first air into the inflatable device during the first time period and to control the compressor to direct the second air into the inflatable device during the second time period.

9. The system of claim 8, wherein the controller is further configured to control the fan and the compressor based on an elapsed amount of time since the first start time.

10. The system of claim 9, further comprising a pressure sensor (260) configured to detect a pressure of device air in the inflatable device, wherein the controller (208) is further configured to control the fan and the compressor based on the pressure of the device air in the inflatable device.

11. The system of claim 1,
wherein the fan motor is configured to drive the fan to direct first air into the inflatable device during a first time period; and
wherein the compressor motor is configured to drive the compressor to direct second air into the inflatable device via a primary inlet (404) during a second time period that is different than the first time period, and
a secondary inlet (406) configured to facilitate flow of a third air into the inflatable device in response to the compressor directing the second air into the inflatable device during the second time period.

12. A method for inflating an inflatable device (200;250), the method comprising:
providing, by a ducted fan aspirator (202;252), first air into the inflatable device during a first time period from a first start time to a first end time, wherein the ducted fan aspirator includes a fan channel (310) through which air flows between a fan inlet (304) and a fan outlet (306);
providing, by the ducted fan aspirator, fourth air into the inflatable device during the first time period, the fourth air flowing through a gap (316) of the ducted fan aspirator in response to the first air being provided by the ducted fan aspirator, wherein the gap exists between and an outer edge of fan blades of the fan and an outer edge of the fan channel such that, as the fan directs air through the fan channel, additional air may flow through the gap, thus increasing a total airflow through the ducted fan aspirator beyond that provided solely by the fan;
providing, by a compressor aspirator (204;254), second air into the inflatable device during a second time period from a second start time to a second end time, wherein the compressor aspirator includes a primary inlet (404) through which the second air flows into the compressor aspirator and a secondary inlet (406) configured to facilitate flow of a third air into the inflatable device in response to the second air being provided by the compressor aspirator.

13. The method of claim 12, wherein the second start time is later than the first start time, and the second end time is later than the first end time.

14. The method of claim 12 or 13, further comprising controlling, by a controller (208), the ducted fan aspirator and the compressor aspirator based on an elapsed amount of time since the first start time; and/or the method further comprising:
detecting, by a pressure sensor (260), a pressure of device air in the inflatable device; and
controlling, by a controller (208), the ducted fan aspirator and the compressor aspirator based on the pressure of the device air.

## Patentansprüche

1. System zum Aufblasen einer aufblasbaren Vorrichtung (200; 250), wobei das System Folgendes umfasst:
die aufblasbare Vorrichtung;
Umfasst: einen mit der aufblasbaren Vorrichtung gekoppelten Kanalsauglüfter (202; 252) mit einem Lüfter (300) und einem Lüftermotor (302), der so konfiguriert ist, dass er den Lüfter antreibt, um erste Luft in die aufblasbare Vorrichtung zu leiten, wobei der Kanalsauglüfter einen Lüfterkanal (310) umfasst, durch den Luft zwischen einem Lüftereinlass (304) und einem Lüfterauslass (306) strömt;
einen Spalt (316), der so konfiguriert ist, dass er den Strom einer vierten Luft in die aufblasbare Vorrichtung als Reaktion auf den Lüfter, der die erste Luft in die aufblasbare Vorrichtung leitet, erleichtert, wobei der Spalt zwischen einer Außenkante von Lüfterflügeln des Lüfters und einer Außenkante des Lüfterkanals derart vorhanden ist, dass, wenn der Lüfter Luft durch den Lüfterkanal leitet, zusätzliche Luft durch den Spalt strömen kann, wodurch ein Gesamtluftstrom durch den Kanalsauglüfter über den Strom hinaus erhöht wird, der allein durch den Lüfter bereitgestellt wird; und
eine Verdichteransaugvorrichtung (204; 254), die mit der aufblasbaren Vorrichtung gekoppelt ist und einen Verdichter (400) aufweist, einen Verdichtermotor (402), der so konfiguriert ist, dass er den Verdichter antreibt, um zweite Luft in die aufblasbare Vorrichtung zu leiten, wobei die Verdichteransaugvorrichtung einen primären Einlass (404), durch den die zweite Luft in die Verdichteransaugvorrichtung strömt, und einen sekundären Einlass (406) aufweist, der so konfiguriert ist, dass er das Strömen einer dritten Luft in die aufblasbare Vorrichtung als Reaktion darauf erleichtert, dass der Verdichter die zweite Luft in die aufblasbare Vorrichtung leitet.

2. System nach Anspruch 1, wobei die Verdichteransaugvorrichtung ferner Folgendes umfasst:
eine primäre Klappe (416), die in der Nähe des primären Einlasses angeordnet und so konfiguriert ist, dass sie die Wahrscheinlichkeit verringert, dass die zweite Luft stromaufwärts durch den primären Einlass strömt; und
eine sekundäre Klappe (418), die in der Nähe des sekundären Einlasses angeordnet und so konfiguriert ist, dass sie die Wahrscheinlichkeit verringert, dass die dritte Luft stromaufwärts durch den sekundären Einlass strömt.

3. System nach Anspruch 2, bei dem die Verdichteransaugvorrichtung eine Längsachse (420) aufweist und der primäre Einlass relativ zum sekundären Einlass radial nach innen angeordnet ist.

4. System nach Anspruch 3, wobei die Verdichteransaugvorrichtung ferner Folgendes umfasst:
einen Auslass (408), durch den die zweite Luft und die dritte Luft aus der Verdichteransaugvorrichtung und in die aufblasbare Vorrichtung strömen;
eine Auslasskammer (410), in der sich die zweite Luft und die dritte Luft mischen;
einen primären Auslass (412) stromabwärts vom Verdichter, durch den die zweite Luft in die Auslasskammer eintritt; und
einen sekundären Auslass (414) stromabwärts vom sekundären Einlass, durch den die dritte Luft in die Auslasskammer eintritt.

5. System nach Anspruch 2, 3 oder 4, wobei der Kanalsauglüfter ferner Folgendes umfasst:
den Lüftereinlass (304), durch den die erste Luft in den Kanalsauglüfter strömt;
eine Lüfterklappe (308), die sich in der Nähe des Lüftereinlasses befindet und so konfiguriert ist, dass sie die Wahrscheinlichkeit verringert, dass die erste Luft stromaufwärts durch den Lüftereinlass strömt;
den Lüfterauslass (306) stromabwärts vom Lüfter, durch den die erste Luft aus dem Kanalsauglüfter strömt; und
den Lüfterkanal (310), der sich vom Lüftereinlass zum Lüfterauslass erstreckt.

6. System nach Anspruch 5, wobei
der Kanalsauglüfter eine Längsachse (318) aufweist;
der Lüfter entlang der Längsachse zentriert ist; und
der Lüfter eine radiale Lüfterlänge (312) aufweist, die kleiner ist als eine radiale Kanallänge (314) des Lüfterkanals.

7. System nach einem der vorhergehenden Ansprüche, das ferner eine Steuerung (208) umfasst, die mit dem Kanalsauglüfter und der Verdichteransaugvorrichtung gekoppelt und so konfiguriert ist, dass sie die erste Luft während eines ersten Zeitraums von einer ersten Startzeit bis zu einer ersten Endzeit in die aufblasbare Vorrichtung leitet, und so konfiguriert ist, dass sie die zweite Luft während eines zweiten Zeitraums von einer zweiten Startzeit, die später als die erste Startzeit ist, bis zu einer zweiten Endzeit, die später als die erste Endzeit ist, in die aufblasbare Vorrichtung leitet.

8. System nach Anspruch 1, 3, 4, 5 oder 6, das ferner eine Steuerung (208) umfasst, die mit dem Kanalsauglüfter und der Verdichteransaugvorrichtung gekoppelt und so konfiguriert ist, dass sie den Lüfter steuert, um die erste Luft während des ersten Zeitraums in die aufblasbare Vorrichtung zu leiten, und den Verdichter steuert, um die zweite Luft während des zweiten Zeitraums in die aufblasbare Vorrichtung zu leiten.

9. System nach Anspruch 8, wobei die Steuerung ferner so konfiguriert ist, dass sie den Lüfter und den Verdichter auf der Grundlage einer seit der ersten Startzeit verstrichenen Zeitspanne steuert.

10. System nach Anspruch 9, das ferner einen Drucksensor (260) umfasst, der so konfiguriert ist, dass er einen Druck der Vorrichtungsluft in der aufblasbaren Vorrichtung erfasst, wobei die Steuerung (208) ferner so konfiguriert ist, dass sie den Lüfter und den Verdichter auf der Grundlage des Drucks der Vorrichtungsluft in der aufblasbaren Vorrichtung steuert.

11. System nach Anspruch 1,
wobei der Lüftermotor so konfiguriert ist, dass er den Lüfter antreibt, um während eines ersten Zeitraums erste Luft in die aufblasbare Vorrichtung zu leiten; und
wobei der Verdichtermotor so konfiguriert ist, dass er den Verdichter antreibt, um während eines zweiten Zeitraums, der sich von dem ersten Zeitraum unterscheidet, zweite Luft über einen primären Einlass (404) in die aufblasbare Vorrichtung zu leiten, und
ein sekundärer Einlass (406), der so konfiguriert ist, dass er den Strom einer dritten Luft in die aufblasbare Vorrichtung in Reaktion darauf erleichtert, dass der Verdichter die zweite Luft während des zweiten Zeitraums in die aufblasbare Vorrichtung leitet.

12. Verfahren zum Aufblasen einer aufblasbaren Vorrichtung (200; 250), wobei das Verfahren Folgendes umfasst:
Bereitstellen von erster Luft in die aufblasbare Vorrichtung während eines ersten Zeitraums von einer ersten Startzeit bis zu einer ersten Endzeit durch einen Kanalsauglüfter (202; 252), wobei der Kanalsauglüfter einen Lüfterkanal (310) umfasst, durch den Luft zwischen einem Lüftereinlass (304) und einem Lüfterauslass (306) strömt;
Bereitstellen von vierter Luft in die aufblasbare Vorrichtung während des ersten Zeitraums durch den Kanalsauglüfter, wobei die vierte Luft als Reaktion auf die erste Luft, die durch den Kanalsauglüfter bereitgestellt wird, durch einen Spalt (316) des Kanalsauglüfters strömt, wobei der Spalt zwischen einer Außenkante von Lüfterflügeln des Lüfters und einer Außenkante des Lüfterkanals derart vorhanden ist, dass, wenn der Lüfter Luft durch den Lüfterkanal leitet, zusätzliche Luft durch den Spalt strömen kann, wodurch ein Gesamtluftstrom durch den Kanalsauglüfter über den Strom hinaus erhöht wird, der allein durch den Lüfter bereitgestellt wird;
Bereitstellen von zweiter Luft in die aufblasbare Vorrichtung durch eine Verdichteransaugvorrichtung (204; 254) während eines zweiten Zeitraums von einer zweiten Startzeit bis zu einer zweiten Endzeit, wobei die Verdichteransaugvorrichtung einen primären Einlass (404), durch den die zweite Luft in die Verdichteransaugvorrichtung strömt, und einen sekundären Einlass (406) umfasst, der so konfiguriert ist, dass er den Strom einer dritten Luft in die aufblasbare Vorrichtung in Reaktion auf die zweite Luft, die durch die Verdichteransaugvorrichtung bereitgestellt wird, erleichtert.

13. Verfahren nach Anspruch 12, wobei die zweite Startzeit später als die erste Startzeit und die zweite Endzeit später als die erste Endzeit ist.

14. Verfahren nach Anspruch 12 oder 13, das ferner das Steuern des Kanalsauglüfters und der Verdichteransaugvorrichtung durch eine Steuerung (208) auf der Grundlage einer seit der ersten Startzeit verstrichenen Zeitspanne umfasst; und/oder das Verfahren ferner Folgendes umfasst:
Erfassen eines Drucks der Vorrichtungsluft in der aufblasbaren Vorrichtung durch einen Drucksensor (260); und
Steuern des Kanalsauglüfters und der Verdichteransaugvorrichtung auf der Grundlage des Drucks der Vorrichtungsluft durch eine Steuerung (208).

## Revendications

1. Système pour gonfler un dispositif gonflable (200 ; 250), le système comprenant :
le dispositif gonflable ;
un aspirateur à ventilateur canalisé (202 ; 252) couplé au dispositif gonflable et ayant un ventilateur (300) et un moteur de ventilateur (302) configuré pour entraîner le ventilateur afin de diriger un premier air dans le dispositif gonflable, dans lequel l'aspirateur à ventilateur canalisé inclut un canal de ventilateur (310) à travers lequel l'air circule entre une entrée de ventilateur (304) et une sortie de ventilateur (306) ;
un espace (316) configuré pour faciliter l'écoulement d'un quatrième air dans le dispositif gonflable en réponse au ventilateur dirigeant le premier air dans le dispositif gonflable, dans lequel l'espace existe entre un bord extérieur des pales du ventilateur et un bord extérieur du canal du ventilateur de telle sorte que, lorsque le ventilateur dirige l'air à travers le canal du ventilateur, de l'air supplémentaire peut circuler à travers l'espace, augmentant ainsi un débit d'air total à travers l'aspirateur à ventilateur canalisé au-delà de celui fourni uniquement par le ventilateur ; et
un aspirateur compresseur (204 ; 254) couplé au dispositif gonflable et ayant un compresseur (400), un moteur de compresseur (402) configuré pour entraîner le compresseur pour diriger un deuxième air dans le dispositif gonflable, dans lequel l'aspirateur compresseur inclut une entrée primaire (404) à travers laquelle le deuxième air s'écoule dans l'aspirateur compresseur et une entrée secondaire (406) configurée pour faciliter l'écoulement d'un troisième air dans le dispositif gonflable en réponse au compresseur dirigeant le deuxième air dans le dispositif gonflable.

2. Système selon la revendication 1, dans lequel l'aspirateur compresseur inclut également :
un volet primaire (416) situé à proximité de l'entrée primaire et configuré pour réduire la probabilité que le deuxième air s'écoule en amont à travers l'entrée primaire ; et
un volet secondaire (418) situé à proximité de l'entrée secondaire et configuré pour réduire la probabilité que le troisième air s'écoule en amont à travers l'entrée secondaire.

3. Système selon la revendication 2, dans lequel l'aspirateur compresseur a un axe longitudinal (420), et l'entrée primaire est située radialement vers l'intérieur par rapport à l'entrée secondaire.

4. Système selon la revendication 3, dans lequel l'aspirateur compresseur inclut également :
une sortie (408) à travers laquelle le deuxième air et le troisième air sortent de l'aspirateur compresseur et pénètrent dans le dispositif gonflable ;
une chambre de sortie (410) dans laquelle le deuxième air et le troisième air se mélangent ;
une sortie primaire (412) en aval du compresseur par laquelle le deuxième air pénètre dans la chambre de sortie ; et
une sortie secondaire (414) en aval de l'entrée secondaire par laquelle le troisième air pénètre dans la chambre de sortie.

5. Système selon la revendication 2, 3 ou 4, dans lequel l'aspirateur à ventilateur canalisé inclut également :
l'entrée du ventilateur (304) à travers laquelle le premier air s'écoule dans l'aspirateur à ventilateur canalisé ;
un volet de ventilateur (308) situé à proximité de l'entrée du ventilateur et configuré pour réduire la probabilité que le premier air s'écoule en amont à travers l'entrée du ventilateur ;
la sortie du ventilateur (306) en aval du ventilateur à travers laquelle le premier air sort de l'aspirateur à ventilateur canalisé ; et
le canal du ventilateur (310) se prolongeant de l'entrée du ventilateur à la sortie du ventilateur.

6. Système selon la revendication 5, dans lequel
l'aspirateur à ventilateur canalisé a un axe longitudinal (318) ;
le ventilateur est centré le long de l'axe longitudinal ; et
le ventilateur a une longueur radiale de ventilateur (312) qui est inférieure à une longueur radiale de canal (314) du canal du ventilateur.

7. Système selon une quelconque revendication précédente, comprenant également un contrôleur (208) couplé à l'aspirateur à ventilateur canalisé et à l'aspirateur compresseur et configuré pour diriger le premier air dans le dispositif gonflable pendant une première période de temps allant d'une première heure de début à une première heure de fin, et configuré pour diriger le deuxième air dans le dispositif gonflable pendant une seconde période de temps allant d'une seconde heure de début qui est postérieure à la première heure de début à une seconde heure de fin qui est postérieure à la première heure de fin.

8. Système selon la revendication 1, 3, 4, 5 ou 6, comprenant également un contrôleur (208) couplé à l'aspirateur à ventilateur canalisé et à l'aspirateur compresseur et configuré pour commander le ventilateur afin de diriger le premier air dans le dispositif gonflable pendant la première période de temps et pour commander le compresseur afin de diriger le deuxième air dans le dispositif gonflable pendant la seconde période de temps.

9. Système selon la revendication 8, dans lequel le contrôleur est également configuré pour contrôler le ventilateur et le compresseur sur la base d'une durée écoulée depuis la première heure de début.

10. Système selon la revendication 9, comprenant également un capteur de pression (260) configuré pour détecter une pression d'air du dispositif dans le dispositif gonflable, dans lequel le contrôleur (208) est également configuré pour commander le ventilateur et le compresseur sur la base de la pression de l'air du dispositif dans le dispositif gonflable.

11. Système selon la revendication 1,
dans lequel le moteur du ventilateur est configuré pour entraîner le ventilateur afin de diriger un premier air dans le dispositif gonflable pendant une première période de temps ; et dans lequel le moteur du compresseur est configuré pour entraîner le compresseur afin de diriger un deuxième air dans le dispositif gonflable par l'intermédiaire d'une entrée primaire (404) pendant une seconde période de temps qui est différente de la première période de temps, et
une entrée secondaire (406) configurée pour faciliter l'écoulement d'un troisième air dans le dispositif gonflable en réponse au compresseur dirigeant le deuxième air dans le dispositif gonflable pendant la seconde période de temps.

12. Procédé de gonflage d'un dispositif gonflable (200 ; 250), le procédé comprenant :
la fourniture par un aspirateur à ventilateur canalisé (202 ; 252), d'un premier air dans le dispositif gonflable pendant une première période de temps allant d'une première heure de début à une première heure de fin, dans lequel l'aspirateur à ventilateur canalisé inclut un canal de ventilateur (310) à travers lequel l'air circule entre une entrée de ventilateur (304) et une sortie de ventilateur (306) ;
la fourniture par l'aspirateur à ventilateur canalisé, d'un quatrième air dans le dispositif gonflable pendant la première période de temps, le quatrième air s'écoulant à travers un espace (316) de l'aspirateur à ventilateur canalisé en réponse au premier air fourni par l'aspirateur à ventilateur canalisé, dans lequel l'espace existe entre un bord extérieur des pales du ventilateur et un bord extérieur du canal du ventilateur de telle sorte que, lorsque le ventilateur dirige l'air à travers le canal du ventilateur, de l'air supplémentaire peut s'écouler à travers l'espace, augmentant ainsi un débit d'air total à travers l'aspirateur à ventilateur canalisé au-delà de celui fourni uniquement par le ventilateur ;
la fourniture par un aspirateur compresseur (204 ; 254), d'un deuxième air dans le dispositif gonflable pendant une seconde période de temps allant d'une seconde heure de début à une seconde heure de fin, dans lequel l'aspirateur compresseur inclut une entrée primaire (404) à travers laquelle le deuxième air s'écoule dans l'aspirateur compresseur et une entrée secondaire (406) configurée pour faciliter l'écoulement d'un troisième air dans le dispositif gonflable en réponse au deuxième air fourni par l'aspirateur compresseur.

13. Procédé selon la revendication 12, dans lequel la seconde heure de début est postérieure à la première heure de début, et la seconde heure de fin est postérieure à la première heure de fin.

14. Procédé selon la revendication 12 ou 13, comprenant également la commande, par un contrôleur (208), de l'aspirateur à ventilateur canalisé et de l'aspirateur compresseur sur la base d'un temps écoulé depuis la première heure de début ; et/ou procédé comprenant également :
la détection, par un capteur de pression (260), d'une pression d'air dans le dispositif gonflable ; et
la commande, par un contrôleur (208), de l'aspirateur à ventilateur canalisé et de l'aspirateur compresseur sur la base de la pression de l'air du dispositif.
